# EUROPEAN PATENT SPECIFICATION

(11) **EP 1 586 176 B1**
(45) Date of publication and mention of the grant of the patent: **21.02.2007**
(21) Application number: 03780493.7
(22) Date of filing: 19.12.2003
(51) Int. Cl.: H04L 12/28

(54) **DYNAMIC NETWORK FORMATION FOR WIRELESS ADHOC NETWORKS**
DYNAMISCHER NETZAUFBAU FÜR DRAHTLOSE AD-HOC NETZE
FORMATION DE RESEAU DYNAMIQUE POUR RESEAUX ADHOC SANS FIL

(30) Priority: 10.01.2003 EP 03100037
(43) Date of publication of application: 19.10.2005
(73) Proprietor: Philips Intellectual Property & Standards GmbH, 20099 Hamburg (DE); Koninklijke Philips Electronics N.V., 5621 BA Eindhoven (NL)
(72) Inventor: FALCK, Thomas, c/o Philips Int. Pty. & Stand. GmbH, 52066 Aachen (DE); ESPINA PEREZ, Javier, c/o Philips Int Py & St GmbH, 52066 Aachen (DE); MAASS, Henning, c/o Philips Int Pty. & Stand. GmbH, 52066 Aachen (DE); WEIDENHAUPT, Klaus, c/o Philips Int Py. & St. GmbH, 52066 Aachen (DE)
(74) Representative: Volmer, Georg
(86) International application number: PCT/IB2003/006266
(87) International publication number: WO 2004/064328

(56) References cited:
- EP-A- 1 357 712
- WO-A-01/41377
- WO-A-02/39484
- US-A1- 2002 044 549
- YONG LIU ET AL: "A bluetooth scatternet route structure for multihop Ad hoc networks" IEEE JOURNAL ON SELECTED AREAS IN COMMUNICATIONS, IEEE SERVICE CENTER, PISCATAWAY, US, vol. 21, no. 2, February 2003 (2003-02), pages 229-239, XP002243904 ISSN: 0733-8716

## Description

The invention relates to a network having at least one slave terminal and a master terminal connected thereto. Such networks may, for example, comprise terminals that operate according to the Bluetooth Standard.

The Bluetooth Standard was originally developed in order to make possible a wireless communication of the widest variety of terminals over short distances. It was only after a time that the requirement for an interconnection of Bluetooth terminals, the creation of a so-called adhoc network arose. In this connection, however, the problem arises of how a Bluetooth network comprising a plurality of subscribers is formed rapidly and automatically since the Bluetooth Specification made no provisions therefore. The document "Bluetooth SIG, PAN Working Group, Personal Area Networking Profile, Version 1.0, July 23,2002, pages 10 to 12" describes, for example, how a network is to be formed under the Bluetooth standard- This specifies that a network formation takes place only manually, i- e. no proposals are made about the form in which a terminal can automatically be incorporated in a network and can make connections, for example, to even two connected terminals.

The WO 01/41377 describes a method for forming a piconet based on route discovery. There are terminals which are members of two piconet networks and performing a bridging function for forwarding packets from one piconet to another piconet. If there are slow routes a new intermediate piconet network is formed to come closer to the destination node. The terminal performs an INQUIRY and after a new terminal has been found a PAGE operation is performed by the same terminal to connect the new terminal.

It is an object of the invention to provide a network that automatically makes possible incorporation of a terminal.

The object is solved by the features of the independent claims. In particular, the object is achieved by a network of the type mentioned at the outset by the following measures:

The network comprises at least one slave terminal and a master terminal connected thereto that is provided to issue requests to at least one slave terminal to search for at least one other terminal to be incorporated in the network by requesting at least one other terminal to be incorporated, wherein a non-incorporated terminal is provided for transmitting a response including an address of the non-incorporated terminal to the requesting slave terminal after receiving a request and wherein the requesting slave terminal is provided for forwarding the response to the master terminal wherein after receiving a response of a hitherto non-incorporated terminal, the master terminal is provided for setting up a connection to the other terminal to be incorporated,

According to the invention, it is not the master terminal that is employed to emit requests to terminals not incorporated in the network, but a slave terminal instructed by it. Consequently, the master terminal can largely concern itself with communication in the network. After a terminal has responded to a request of a slave terminal, this response is forwarded to the master terminal, which then starts setting up the call to said terminal under certain conditions. One condition could, for example, be that a terminal has not previously been connected to the network. These conditions could be checked by means of a special list (blacklist) managed by the master terminal, as specified in claim 2.

Furthermore, claim 3 provides, according to the invention, that a slave terminal only executes requests and does not send a response to a request to another terminal. Slave terminals are consequently not detectable by other terminals. This prevents a member of a terminal already belonging to the network being discovered again.

The network according to the invention can be formed with terminals that operate according to the Bluetooth Standard. The construction of the software components provided therefor is presented in claim 4.

In order not to disturb the communication in the network unnecessarily, the master terminal is provided to instruct only a single slave terminal not involved in the communication with a request

The invention also relates to a terminal that is provided for incorporation as slave terminal or master terminal in a network.

These and other aspects of the invention are apparent from and will be elucidated with reference to the embodiments described hereinafter.

In the drawings:
Fig. 1 shows an extremely simplified layer model of the software components contained in a terminal,
Fig. 2 shows a network having various incorporated terminals and a further terminal to be incorporated, and
Fig. 3 shows a state diagram for explaining the software, according to the invention, of a terminal.

Bluetooth is a communications standard for wireless radio communication that is intended to make possible data exchange between all the conceivable terminal types. Everything, whether a notebook, organizer, mobile telephone or peripheral appliances of computers, is intended to acquire the capability through Bluetooth to communicate mutually. The terminals in a Bluetooth network operate on 79 channels, each having a bandwidth of 1 MHz in the 2.45 GHz frequency range. It is not one and the same channel that is constantly used for the communication, but the frequency is altered (frequency hopping) 1,600 times per second in order to eliminate interference with other appliances. This is necessary since the frequency band used is not freely available. The useful data are transported in a packet-oriented way and, in order to meet application requirements, various packet types are defined. They differ according to synchronous and asynchronous operation and are identified by an entry in the header.

Essential properties of a Bluetooth appliance are, on the one hand, a separate clock rate that sets the clock rate in the case of frequency changes and also an unambiguous Bluetooth terminal address (Bluetooth device address). This then also produces the identity of the terminal, which stipulates the various frequencies in the hopping sequence.

During the connection of two Bluetooth terminals, one takes on the role of the master terminal and the other the role of the slave terminal. In this connection, it is to be noted that there is not such a thing as predetermined master or slave terminals and the role distribution takes place dynamically when setting up a call. The master terminal compulsorily determines the hopping sequence, that is to say the "jumps" between the frequencies, for the slave terminal and distributes the transmission rights.

When setting up a call, two phases are traversed. The first phase is denoted as the inquiry phase and is used when terminals not yet discovered about which no information items are yet available are to be sought. As long as there is no connection, a terminal constantly alternates between the states of inquiry (request) and inquiry-scan (search for a request). In the inquiry state, the terminal jumps between 32 frequencies and sends out its request. In the inquiry-scan state, the appliance likewise jumps between 32 frequencies and searches for an inquiry message. If a terminal in the inquiry-scan state receives such a request, it responds by transmitting its address and its clock rate, and a communication can start.

The second phase of setting up a call is denoted as the paging phase. In this phase, one terminal changes to the paging (call) state and the other terminal to the page-scan (search for a call) state. In this connection, the role distribution is defined in such a way that the requesting terminal becomes the master terminal and the other terminal becomes a slave terminal. A precondition is that the Bluetooth terminal address of the slave terminal is known to the master terminal. The paging phase can be accelerated if, in addition to the address, the clock rate of the slave terminal is also available to the master terminal. The master terminal transmits to the slave terminal its own clock rate and hopping sequence and instructs it to adopt it. The slave terminal then synchronizes with the master terminal and can consequently communicate with it.

Transmitted between the individual terminals are data packets that contain, in addition to the useful data, also additional information items, such as, for example, transmitter and receiver address, transmitting options, synchronization information items and optionally security information items and additional redundancies. Such a packet comprises a 72-bit access code, a 54-bit header, and also a variable useful-data field having a length of 0 to 2745 bits. For the inquiry phase, for example, an ID packet is used that contains the address of the terminal. A further packet is the FHS (frequency hopping synchronization) with which, inter alia, clock rate information items, the terminal address, the phase of the hopping sequence, the designation of the "class of service" (which type of appliance is involved in the piconet) are transmitted when setting up a connection.

Bluetooth networks can be implemented in a point-to-point, piconet and scattemet topology. Said network topologies open up a multiplicity of conceivable application possibilities. A piconet comprises a master terminal and up to seven active slave terminals. A master may, in principle, control more than seven slave terminals by putting a few slave terminals in a type of sleep mode. However, this may appreciably slow down data exchange, especially if an active slave terminal wishes to transmit data to another slave terminal in a sleep mode. In this connection, the communication basically proceeds exclusively via the master terminal, which distributes transmitting rights and which specifies the frequencies to be used. The master terminal alternately distributes transmitting rights to the individual slave terminals.

Owing to the application of frequency hopping, it is possible for a plurality of piconets to coexist alongside one another. In this connection, a terminal may even be a member in a plurality of piconets. For this purpose, the terminal simply stores the hopping sequence of all the master terminals in whose network it is a member and can thus tune to the frequency of each network. Such a terminal is denoted as a bridge terminal (bridge node) since it is, as it were, a bridge between the piconets. A plurality of piconets connected in this way form a scatternet.

The Bluetooth Standard was originally developed in order to make possible a wireless communication of the widest variety of terminals over short distances. It was only after a time that the requirement for an interconnection of Bluetooth terminals, the creation of a so-called adhoc network arose. For example, a plurality of subscribers of a seminar having Bluetooth terminals are situated in a room and these individuals would like to exchange their data with one another. Ideally, each subscriber would execute a command of the type "set up connection to adhoc network". After a short time a message "connection to adhoc network exists" would be received and they would then be able to exchange data with any other subscribers. In this connection, however, the problem arises of how a Bluetooth network comprising a plurality of subscribers is formed rapidly and automatically since the Bluetooth Specification makes no provisions therefor.

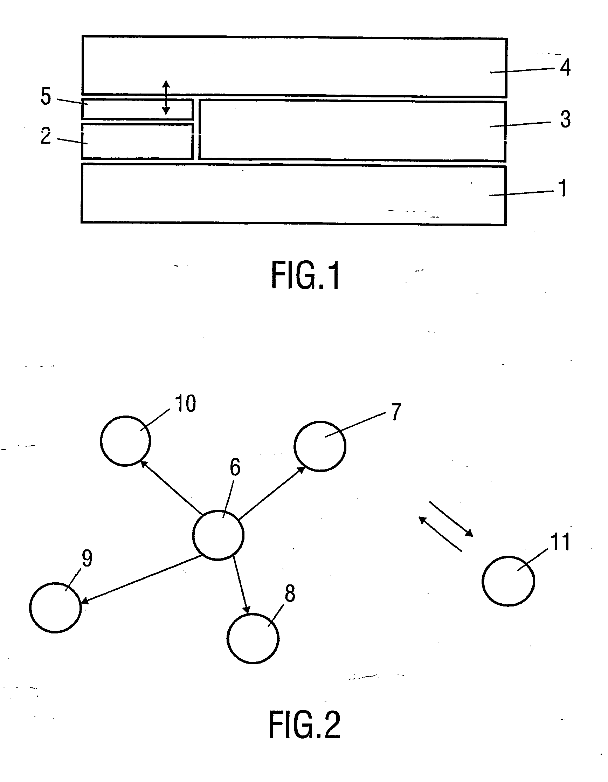

A terminal contains, according to the invention, a software component that is designated as "dynamic personal area network manager" (referred to below as DPM software) and that interacts with the actual Bluetooth software and the respective application software and is provided for forming and for controlling an adhoc network. A considerably simplified layer model of the software component is shown in Fig. 1. Disposed above layer 1, which represents the Bluetooth software (first software component), is the layer containing the DPM software 2 (second software component) and a software 3 provided for the Internet protocol. In the uppermost layer 4 is the application software, which starts, controls and terminates the DPM software via a software interface 5 (designated below as DPM API software).

During the formation of the adhoc network, a network formation procedure described below is executed by the respective DPM software in the terminal concerned. The first step in an automatic adhoc network formation according to the invention is an automatic detection of terminals in their respective environment. Before the start of a network formation, the terminals have to collect information items relating to their environment independently of one another. Furthermore, each terminal can independently form an adhoc network by executing the inquiry and inquiry-scan states described above in a non-existent network. The switching time between the two states must in that case be chosen randomly.

Every terminal not having a connection searches for other terminals in its environment (inquiry phase). If another terminal has been found, the inquiry phase is stopped and a connection is set up with the detected terminal (via the paging phase). Consequently, a new piconet can be created spontaneously. If a third terminal detects a terminal of the piconet just formed, the procedure described below is used for incorporating the third terminal.

According to the invention, a master terminal selects in each case an assigned slave terminal in a certain sequence in order to execute requests (inquiry state). This minimizes the number of requests executed by an existing network. Since a request (inquiry state) has a disturbing effect on the communication within a network, the interruptions associated with search requests are also minimized by minimizing the search requests.

The incorporation of further slave terminals can be explained by the following steps and by means of Fig. 2. Fig. 2 shows a master terminal 6 and four slave terminals 7 to 10 connected to the master terminal 6. All the terminals 6 to 10 are in the connected state. It is only in response to an instruction from the master terminal 6 that one of the slave terminals 7 to 10 changes to the inquiry state. The terminal 11 approaches the piconets (comprising the terminals 6 to 10) and is to be incorporated in the piconet. In a first step, the master terminal 6 instructs precisely one of its slave terminals to change periodically to the inquiry state, i.e. to execute search requests. In Fig. 2, this is, for example, the slave terminal 7. The terminal 11, which has hitherto not been incorporated in the piconet, approaches it and alternates between the inquiry and inquiry-scan states. The terminal 11 thereby checks whether another terminal is emitting search requests. After the terminal 11 has received a request from the slave terminal 7 in the inquiry-scan state, it responds with a packet containing its address (FHS packet) and converts to the page-scan state in order to connect to the piconet. After receiving the FHS packet, the slave terminal 7 has discovered the terminal 11. The slave terminal 7 then stops the request (inquiry state) and informs the master terminal 6 about the new terminal 11 by forwarding the FHS packets received from the terminal 11. The master terminal 6 now has all the information items necessary to incorporate the terminal 11 in the network. The master terminal 6 then converts to the paging state and calls (pages) the new terminal 11, which accepts and consequently becomes a new member of the existing piconet. The master terminal 6 then instructs the next slave terminal (for example slave terminal 8) to execute inquiries.

The master terminal orders the slave terminals to execute inquiries in a certain sequence. For example, said certain sequence may appear such that all the slave terminals convert one after the other to the inquiry phase after an equal, specified time in each case.

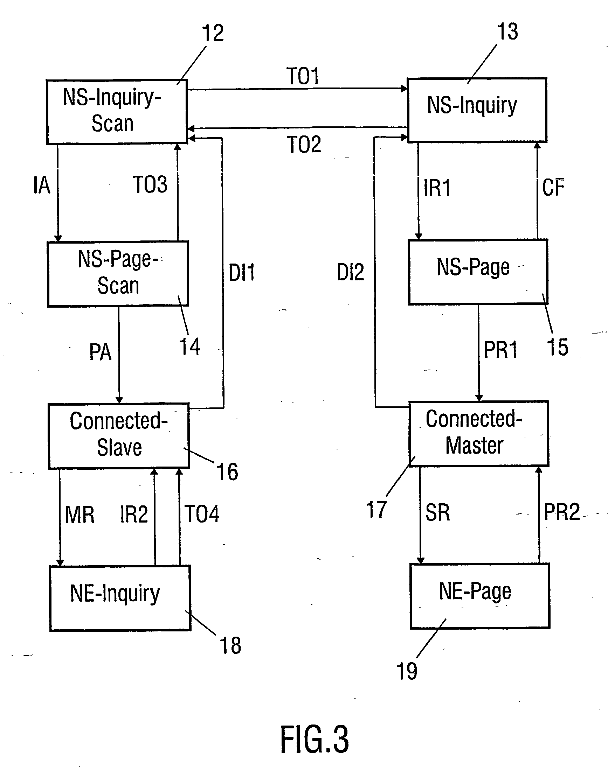

The function of the DPM software, which controls the process described above can be explained by reference to the state diagram shown in Fig. 3. The DPM software has a total of eight states that are indicated by the rectangles 12 to 19 in Figure 3. The states indicated by the rectangles 12 to 15 relate to the situation where a terminal not yet connected to a network sets up a connection. In the NS inquiry-scan state (rectangle 12) and NS inquiry state (rectangle 13), the terminal has not set up a connection and in the NS page-scan state (rectangle 14) and NS page state (rectangle 15), the terminal is about to set up a connection. In the connected-slave state (rectangle 16) and connected-master state (rectangle 17), the terminal has set up a connection and is a member of a piconet. The NE inquiry state (rectangle 18) and NE paging state (rectangle 19) relate to the case where an existing network is extended.

In the unconnected state, the terminal alternates periodically between the NS inquiry-scan state (rectangle 12) and the NS inquiry state (rectangle 13), as indicated by the arrows TO1 and TO2, after the expiry of a certain time (timeout).

If the terminal in the NS inquiry-scan state (rectangle 12) has responded to another terminal in response to a search request (inquiry), the DPM software converts to the NS page-scan state (rectangle 14) (via the arrow IA) in which the terminal awaits a call request (page) of the other terminal. If the terminal responds to a call request, the connection is set up and the DPM software converts to the connected-slave state (rectangle 16) (via arrow PA). The terminal is then a slave terminal in the network. Otherwise, after the expiry of a specified time (timeout) without call request, the DPM software reverts to the NS inquiry-scan state (rectangle 12) (arrow TO3).

If the terminal in the NS inquiry state (rectangle 13) has received a response to a search request from another terminal, the DPM software converts to the NS paging state (rectangle 15) (via arrow IR1) in which the other terminal just discovered is called (paged). As soon as the other terminal responds to the call request, the connection is set up and the DPM software converts to the connected-master state (rectangle 17) (via arrow PR1). The terminal is then master terminal of the newly created piconet. Otherwise, if the setting up of a connection is unsuccessful, the DPM software reverts to the NS inquiry state (rectangle 13) (arrow CF).

If a piconet exists, the master terminal instructs one of its slave terminals to place search requests (inquiries). In this case, the slave terminal selected from the master terminal changes from the connected-slave state (rectangle 16) to the NE inquiry state (rectangle 18) (via arrow MR). After the expiry of a specified time (timeout), the terminal reverts again to the connected-slave state (rectangle 16) (arrow TO4).

If a slave terminal in the NE inquiry state (rectangle 18) discovers a new terminal, it communicates the latter's address to the master terminal and reverts to the connected-slave state (rectangle 16) (arrow IR2). The master terminal then changes from the connected-master state (rectangle 17) to the NE paging state (rectangle 19) via (arrow SR), in which it calls (pages) the new terminal discovered and thus accepts it into the existing piconet. Finally, the master terminal reverts again to the connected-master state (rectangle 17) (arrow PR2) and instructs the next slave terminal to place search requests (inquiries).

In this connection, the newly added terminal traverses the NS inquiry-scan state (rectangle 12) and the NS page-scan state (rectangle 14) and is then in the connected-slave state (rectangle 16).

It should be mentioned that the members of an existing network never change into the inquiry-scan state, i.e. the terminals of the network never respond to search requests and are consequently also not discoverable. This prevents a member of a terminal already belonging to the network from being discovered again.

If the DPM software receives the instruction from the application software to clear the connection, the DPM software orders the connection to be cleared and the DPM software converts to the NS inquiry-scan state (arrow DI1) or NS inquiry state (arrow DI2).

To optimize the network formation further, applications can place the addresses of undesired terminals on a so-called special list (blacklist) by means of the DPM-API software. Whenever a new terminal is discovered, the master terminal first checks whether it is contained in the special list. In this case, the terminal is ignored, i.e. no attempt is made to set up a connection to said terminal. Otherwise, a connection is set up as described above.

The special list cites, for example, those terminals that were incorporated in the network a certain time ago and are no longer of interest. Furthermore, those terminals can be stored in said special list that do not offer certain services. For example, if a printer is sought for the network, all the terminals not having this printer service are stored in said special list.

The procedure according to the invention is suitable, in particular, for networks in which the terminals move rapidly, because connections can be set up rapidly therewith. This is achieved in that, in an existing piconet, a slave terminal always changes to the inquiry state and a lookout is therefore continuously actively maintained for new terminals. New terminals are therefore discovered as rapidly as possible and added to the existing network.

## Claims

1. A network having at least one slave terminal (7-10) and a master terminal (6) connected thereto that is provided to issue requests to at least one slave terminal (7) to search for at least one other terminal (11) to be incorporated in the network by requesting at least one other terminal (11) to be incorporated, wherein a non-incorporated terminal (11) is provided for transmitting a response including an address of the non-incorporated terminal to the requesting slave terminal (7) after receiving a request and wherein the requesting slave terminal (7) is provided for forwarding the response to the master terminal (6), **characterized in that,** after receiving a response of a hitherto non-incorporated terminal (11), the master terminal (6) is provided for setting up a connection to the other terminal (11) to be incorporated.

2. A network as claimed in claim 1, **characterized in that** the master terminal (6) is provided for incorporating a terminal (11) in the network as a slave terminal if the terminal is not contained in a list including predetermined members of terminals.

3. A network as claimed in claim 1, **characterized in that** a slave terminal (7) sending out the request is not transmitting a response to the other terminal (11).

4. A network as claimed in claim 1, **characterized in that** a terminal (6-11) has a first software component (1) operating according to the Bluetooth Standard and a second software component (2) for controlling the first software component (1), which second software component (2) is provided for converting instructions of a third application-oriented software (4), and **in that** the second software component (2) is provided for incorporating a terminal.

5. A network as claimed in claim 1, **characterized in that** the master terminal (6) is provided to issue a request to only a single slave terminal (7) not involved in the communication of the network.

6. A terminal provided for incorporating as a slave or master terminal in a network, wherein the terminal is provided as master terminal (6) for sending a request to a slave terminal (7) to search for at least one other terminal (11) to be incorporated in the network by requesting at least one other terminal (11) to be incorporated, or the terminal is provided as a non-incorporated terminal (11) after receiving a request for the transmission of a response to the requesting slave terminal (7), or the terminal is provided as requesting slave terminal (7) for receiving a request from a master terminal (6) to search for at least one other terminal (11) to be incorporated in the network and for sending an inquiry, **characterized in that**, the master terminal (6) is provided for receiving a packet from the slave terminal (7) containing an address of the hitherto non-incorporated terminal (11) and for setting up a connection to the other terminal (11) to be incorporated and the slave terminal (7) is provided for forwarding a packet to the master terminal (6), wherein the packet being received in response to the inquiry and containing the address of a hitherto non-incorporated terminal (11).

## Patentansprüche

1. Netzwerk mit wenigstens einem Slave-Terminal (7-10) und einem damit verbundenen Master-Terminal (6), das zur Beauftragung wenigstens eines Slave-Terminals (7) mit Anfragen zur Suche nach wenigstens einem anderen in das Netzwerk einzubindenden Terminal (11) vorgesehen ist, wobei ein nicht eingebundenes Terminal (11) nach Empfang einer Anfrage zur Sendung einer Antwort an das anfragende Slave-Terminal (7) vorgesehen ist und wobei das anfragende Slave-Terminal (7) zur Weiterleitung der Antwort an das Master-Terminal (6) vorgesehen ist, **dadurch gekennzeichnet, dass** nach Empfang einer Reaktion eines bisher nicht eingebundenen Terminals (11) das Master-Terminal (6) vorgesehen ist zum Aufbauen einer Verbindung mit dem anderen einzubindenden Terminal (11).

2. Netzwerk nach Anspruch 1, **dadurch gekennzeichnet, dass** das Master-Terminal (6) zur Einbindung eines Terminals (11) als Slave-Terminal in das Netzwerk vorgesehen ist, wenn das Slave-Terminal nicht auf einer Liste mit vorbestimmten Mitgliedern von Terminals enthalten ist.

3. Netzwerk nach Anspruch 1, **dadurch gekennzeichnet, dass** ein Slave-Terminal (7), das den Antrag aussendet, nicht eine Antwort zu dem anderen Terminal (11) überträgt.

4. Netzwerk nach Anspruch 1, **dadurch gekennzeichnet, dass** ein Terminal (6-11) eine nach dem Bluetooth-Standard arbeitende erste Software-Komponente (1) und eine zweite Software-Komponente (2) zur Steuerung der ersten Software-Komponente (1), welche zur Umsetzung von Anweisungen einer dritten anwendungsorientierten Software (4) vorgesehen ist, und dass die zweite Software-Komponente (2) zur Einbindung eines Terminals vorgesehen ist.

5. Netzwerk nach Anspruch 1, **dadurch gekennzeichnet, dass** das Master-Terminal (6) dazu vorgesehen ist, nur ein einziges, und nicht an der Kommunikation beteiligtes Slave-Terminal mit einer Anfrage zu beauftragen.

6. Terminal, welches zur Einbindung als Slave- oder Master-Terminal in einem Netzwerk vorgesehen ist, wobei das Terminal als Master-Terminal (6) zur Beauftragung wenigstens eines Slave-Terminals (7) mit Anfragen zur Suche nach wenigstens einem anderen in das Netzwerk einzubindenden Terminal (11) vorgesehen ist, und wobei das Terminal als nicht eingebundenes Terminal (11) nach Empfang einer Anfrage zur Sendung einer Antwort an das anfragende Slave-Terminal vorgesehen ist oder wobei das Terminal als anfragendes Slave-Terminal (7) zur Weiterleitung der Antwort an das Master-Terminal (6) vorgesehen ist, **dadurch gekennzeichnet, dass** das Master-Terminal (6) vorgesehen ist zum Empfangen eines Pakets von dem Slave-Terminal (7) mit einer Adresse des bisher nicht eingebundenen Terminals (11) und zum Aufbauen einer Verbindung mit dem anderen einzubindenden Terminal (11) und das Slave-Terminal (7) zum Weiterleiten eines Pakets zu dem Master-Terminal (6) vorgesehen ist, wobei das Paket in Reaktion auf die Anfrage empfangen wird und die Adresse eines bisher nicht eingebundenen Terminals (11) enthält.

## Revendications

1. Réseau ayant au moins un terminal esclave (7-10) et un terminal maître (6) qui y est connecté, conçu pour générer des demandes à au moins un terminal esclave (7) pour rechercher au moins un autre terminal (11) à incorporer dans le réseau en demandant audit au moins un autre terminal (11) à être incorporé, dans lequel un terminal non incorporé (11) est conçu pour transmettre une réponse incluant une adresse du terminal non incorporé au terminal esclave demandeur (7) après la réception d'une demande et dans lequel le terminal esclave demandeur (7) est conçu pour transférer la réponse au terminal maître (6), **caractérisée en ce que**, après la réception d'une réponse du terminal jusqu'ici non incorporé (11), le terminal maître (6) est conçu pour établir une connexion avec l'autre terminal (11) à incorporer.

2. Réseau selon la revendication 1, **caractérisé en ce que** le terminal maître (6) est conçu pour incorporer un terminal (11) dans le réseau en tant que terminal esclave si le terminal n'est pas contenu dans une liste incluant des membres prédéterminés de terminaux.

3. Réseau selon la revendication 1, **caractérisé en ce que** le terminal esclave (7) envoyant la demande n'émet pas de réponse à l'autre terminal (11).

4. Réseau selon la revendication 1, **caractérisé en ce qu'**un terminal (6-11) a un premier composant logiciel (1) fonctionnant selon la norme Bluetooth et un deuxième composant logiciel (2) pour contrôler le premier composant logiciel (1), lequel deuxième composant logiciel (2) est conçu pour convertir des instructions d'un troisième logiciel orienté application (4), et **en ce que** le deuxième composant logiciel (2) est conçu pour incorporer un terminal.

5. Réseau selon la revendication 1, **caractérisé en ce que** le terminal maître (6) est conçu pour générer une demande à seulement un terminal esclave unique (7) non impliqué dans la communication du réseau.

6. Terminal conçu pour incorporation comme terminal esclave ou maître dans un réseau, dans lequel le terminal est conçu comme terminal maître (6) pour envoyer une demande à un terminal esclave (7) pour rechercher au moins un autre terminal (11) à incorporer dans le réseau en demandant audit au moins un autre terminal (11) à être incorporé, ou le terminal est conçu comme un terminal non incorporé (11) après la réception d'une demande d'émission d'une réponse au terminal esclave demandeur (7), ou le terminal est activé comme un terminal esclave demandeur (7) pour recevoir une demande d'un terminal maître (6) pour chercher au moins un autre terminal (11) à incorporer dans le réseau et pour envoyer une demande, **caractérisé en ce que** le terminal maître (6) est conçu pour recevoir un paquet du terminal esclave (7) contenant une adresse du terminal jusqu'ici non incorporé (11) et pour établir une connexion à l'autre terminal (11) à incorporer et le terminal esclave (7) est conçu pour transférer un paquet au terminal maître (6), dans lequel le paquet est reçu en réponse à la demande et contient l'adresse d'un terminal jusqu'ici non incorporé (11).
